# EUROPÄISCHE PATENTSCHRIFT

(11) **EP 1 674 789 B1**
(45) Veröffentlichungstag und Bekanntmachung des Hinweises auf die Patenterteilung: **23.06.2010**
(21) Anmeldenummer: 05025844.1
(22) Anmeldetag: 26.11.2005
(51) Int. Cl.: F21S 8/10, F21V 8/00, F21Y 101/02, F21W 101/14

(54) **Leuchteinheit mit Lichtquelle, Lichtleitkörper und Lichtumlenkbereich**
Lamp unit comprising a light source, a light conducting body and a light redirecting part
Unité de lampe avec une source de lumière, un guide de lumière et une zone permettant de réorienter la lumière

(30) Priorität: 22.12.2004 DE 102004063111
(43) Veröffentlichungstag der Anmeldung: 28.06.2006
(73) Patentinhaber: odelo GmbH, 71409 Schwaikheim (DE)
(72) Erfinder: Stefanov, Emil, 73730 Esslingen (DE); Erber, Andreas, 73760 Ostfildern (DE); Müller, Otto, 73344 Gruibingen (DE)
(74) Vertreter: Kaufmann, Ursula Josefine

(56) Entgegenhaltungen:
- EP-A- 0 935 091
- EP-A- 0 940 625
- DE-A1- 3 123 369
- FR-A- 2 841 966
- FR-A- 2 853 392
- US-A- 5 197 792

## Beschreibung

Die Erfindung betrifft eine Leuchteinheit mit mindestens einer Lichtquelle und mindestens einem der Lichtquelle optisch nachgeschalteten Lichtleitkörper mit direkt oder indirekt von der Lichtquelle ausgeleuchteten, gestaffelt angeordneten Lichtumlenkflächen.

Aus der EP 1 167 869 A2 ist eine derartige Leuchteinheit bekannt. Der Lichtleitkörper ist ein keilförmiges Bauteil, dessen Spitze von der Lichtquelle abgewandt ist. Die beiden Keilflächen, von denen die eine Reflexionsfläche und die andere eine Lichtaustrittsfläche ist, haben eine regelmäßige Struktur. Die Lichtaustrittsfläche hat eine Zusatzoptik, um einen gewünschten optischen Eindruck zu erzielen. Die Gestalt der Lichtaustrittsfläche ist somit vom gewünschten optischen Effekt abhängig.

Die FR-A-2 853 392 offenbart eine Leuchteinheit mit mindestens einer Lichtquelle und mindestens einem der Lichtquelle optisch nachgeschalteten Lichtleitkörper mit indirekt von der Lichtquelle ausgeleuchteten, gestaffelt angeordneten Lichtumlenkflächen, wobei der Flächeninhalt einer Lichtumlenkfläche umso größer ist, je größer der Abstand dieser Lichtumlenkfläche von der die Lichtumlenkflächen ausleuchtenden Lichtquelle oder von einem die Lichtumlenkflächen ausleuchtenden Lichtreflektor ist. Eine solche Leuchteneinheit ist auch aus der FR-A-2 841 966, der US-A-5 197 792 wie auch der DE 31 23 369 bekannt.

Die EP-A-0 935 091 offenbart eine Leuchteinheit mit mindestens einer Lichtquelle und mindestens einem der Lichtquelle optisch nachgeschalteten Lichtleitkörper mit direkt von der Lichtquelle ausgeleuchteten, gestaffelt angeordneten Lichtumlenkflächen, wobei der Flächeninhalt einer Lichtumlenkfläche umso größer ist, je größer der Abstand dieser Lichtumlenkfläche von der die Lichtumlenkflächen ausleuchtenden Lichtquelle oder von einem die Lichtumlenkflächen ausleuchtenden Lichtreflektor ist.

Der vorliegenden Erfindung liegt daher die Problemstellung zugrunde, eine Leuchteinheit zur Erzeugung homogen verteilten ausgekoppelten Lichts zu entwickeln, deren Lichtaustrittsfläche weitgehend frei gestaltet werden kann.

Diese Problemstellung wird mit den Merkmalen des Hauptanspruches gelöst. Dazu ist der Flächeninhalt einer Lichtumlenkfläche umso größer, je größer der Abstand dieser Lichtumlenkfläche von der die Lichtumlenkflächen ausleuchtenden Lichtquelle oder von einem die Lichtumlenkflächen ausleuchtenden Lichtreflektor ist.

Weitere Einzelheiten der Erfindung ergeben sich aus den Unteransprüchen und der nachfolgenden Beschreibung einer schematisch dargestellten Ausführungsform.
- Figur 1:: Dimetrische Ansicht eines Lichtleitkörpers;
- Figur 2:: Leuchteinheit mit einem Lichtleitkörpers nach Figur 1;
- Figur 3:: Seitenansicht des Lichtleitkörpers nach Figur 1;
- Figur 4:: Detail eines Lichtumlenkbereichs;
- Figur 5:: Detail eines Umlenk-Reflektors mit einer Streuoptik.

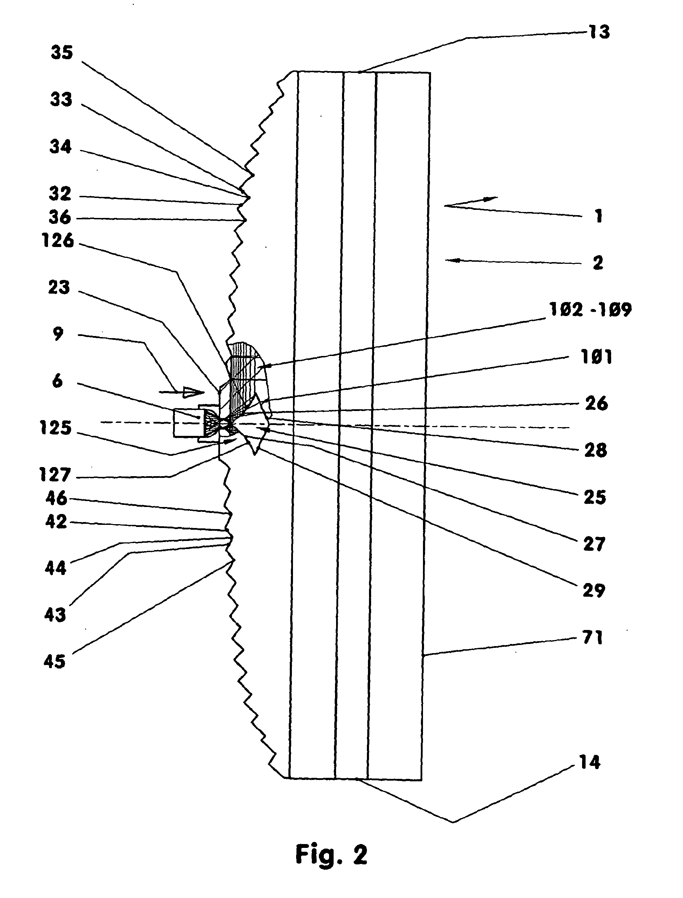

Die Figur 2 zeigt die Draufsicht auf eine Leuchteinheit (2), beispielsweise eine Heckleuchte eines Kraftfahrzeuges. Die Leuchteinheit (2) umfasst eine Lichtquelle (6), z.B. eine Leuchtdiode, eine Glühlampe, Halogenlampe, etc., und einen der Lichtquelle (6) optisch nachgeschalteten Lichtleitkörper (10). Die Lichtquelle (6) kann an den Lichtleitkörper (10) angesetzt sein, in diesen eingeformt sein, eingeclipst sein, etc.

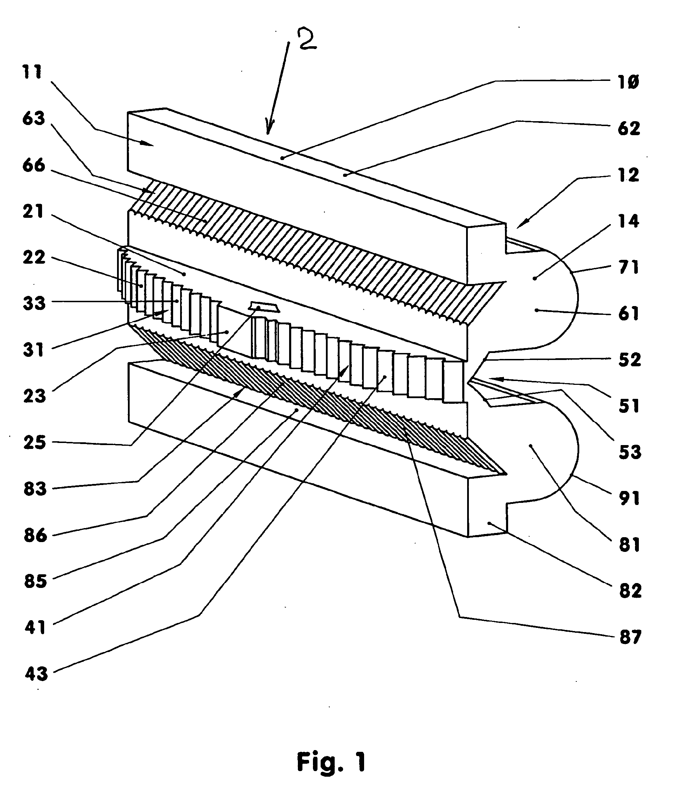

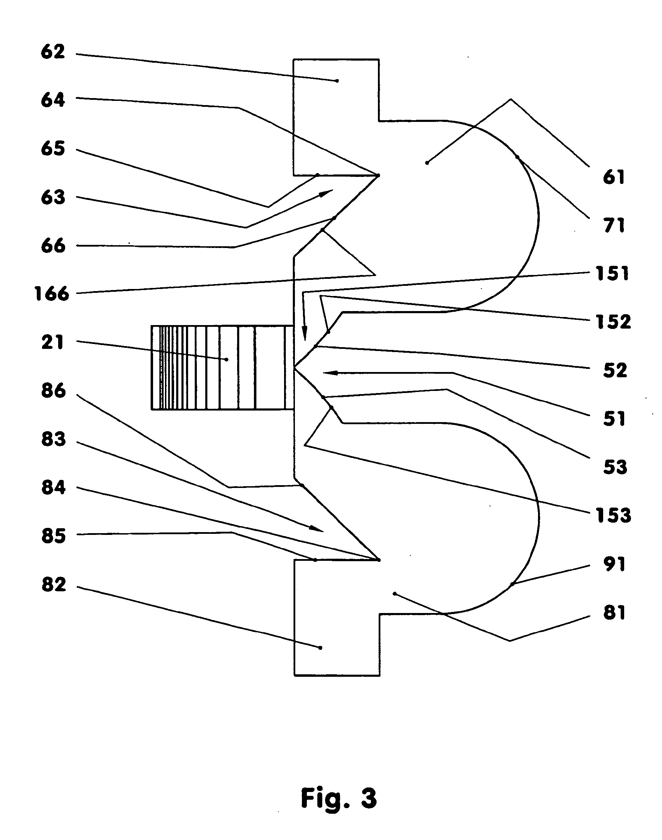

Die Figuren 1 und 3 zeigen den Lichtleitkörper (10) ohne die Lichtquelle (6). Hierbei zeigt die Figur 1 eine dimetrische Ansicht von der Rückseite (11) und die Figur 3 eine Seitenansicht des Lichtleitkörpers (10).

Bei einer in einem hier nicht dargestellten Kraftfahrzeug eingebauten Leuchteinheit (2) sitzt die Lichtquelle (6) beispielsweise innerhalb des Kraftfahrzeuges an der Rückseite (11) des Lichtleitkörpers (10). Von außerhalb des Kraftfahrzeugs sind von der Leuchteinheit (2) z.B. zwei Lichtaustrittsflächen (71, 91) sichtbar, die die Fahrzeugkontur begrenzen. Diese Lichtaustrittsflächen (71, 91) sind beispielsweise auf der Vorderseite (12) des Lichtleitkörpers (10) angeordnet.

Die Leuchteinheit (2) ist z.B. achsensymmetrisch sowohl in Bezug auf eine gedachte horizontale Mittenlängsebene als auch bezüglich einer gedachten vertikalen Mittenquerebene durch die Lichtquelle (6). Diese beiden genannten Ebenen schneiden sich in einer gedachten, in der Einstrahlrichtung (9) orientierten Geraden durch die Lichtquelle (6).

Der Lichtleitkörper (10) ist beispielsweise ein einstückiger transparenter Kunststoffkörper, z.B. aus PMMA, modifiziertes PMMI, etc. Er besteht beispielsweise aus einem Lichtverteiler (21), einer oberen Lichtauskoppeleinheit (61) und einer unteren Lichtauskoppeleinheit (81). Seine Länge beträgt in dem in den Figuren 1 - 3 dargestellten Ausführungsbeispiel das Vierfache seiner Tiefe und das 2,4-fache seiner Höhe.

Der Lichtverteiler (21) ist hier ein sichelförmiges Bauteil. Er ist im Ausführungsbeispiel genauso lang wie der Lichtleitkörper (10). Seine Tiefe beträgt etwa 11% seiner Länge, seine Höhe ungefähr 6% der Länge. Symmetrisch zur vertikalen Mittenquerebene liegt in der rückseitigen Außenfläche (22) eine Lichteintrittsfläche (23). Diese ist beispielsweise eine quadratische Planfläche, deren Kantenlänge der Höhe des Lichtverteilers (21) entspricht.

Auf beiden Seiten der Lichteintrittsfläche (23) besteht die Außenfläche (22) aus jeweils einem gestuften Bereich (31; 41), der die Lichteintrittsfläche (23) mit der jeweiligen Stirnseite (13, 14) verbindet.

Die einzelnen Stufen (32, 33; 42, 43) des jeweiligen gestuften Bereiches (31; 41) bestehen aus Stufenflächen (32; 42) und an diese angrenzende Rückseitenflächen (33; 43). Sie sind Grenzflächen des Lichtverteilers (21) zur Umgebung (1). Die einzelnen Stufenflächen (32; 42) liegen z.B. annähernd parallel zueinander und stehen normal zur horizontalen Mittenlängsebene der Leuchteinheit. Mit der vertikalen Mittenquerebene schließen sie beispielsweise einen Winkel von 45 Grad ein. Die Stufenflächen (32; 42) können mit diesen Ebenen auch unterschiedliche Winkel einschließen.

Eine Stufenfläche (32; 42) und eine der beiden an diese angrenzenden Rückseitenflächen (33; 43) schließen in der Darstellung der Figur 2 miteinender einen Winkel von 90 Grad ein. Dieser eingeschlossene Winkel kann auch ein spitzer oder ein stumpfer Winkel sein. Die Scheitelstrecke (34; 44), die in der Draufsicht der Figur 2 als Scheitelpunkt dargestellt ist, ist die Spitzenlinie einer konkaven Kerbe.

Innerhalb der jeweiligen gestuften Bereiche (31; 41) ist der Abstand der einzelnen Scheitelstrecken (34; 44) zueinander nicht konstant. Der Abstand einer beliebigen Scheitelstrecke (34; 44) zu einer Scheitelstrecke (35; 45), die weiter entfernt ist von der Lichteintrittsfläche (23), ist kleiner als der Abstand zu einer Scheitelstrecke (36; 46), die näher an der Lichteintrittsfläche (23) liegt. Der Abstand zweier benachbarter Scheitelstrecken (34, 35; 34, 36; 44, 45; 44, 46) ist umso kleiner, je weiter diese Scheitelstrecken (34, 35; 34, 36; 44, 45; 44, 46) von der Lichteintrittsfläche (23) entfernt liegen.

Der Lichtverteiler (21) hat eine Aussparung (25) mit z.B. viereckigem Querschnitt, die symmetrisch zur vertikalen Mittenquerebene liegt. Die Länge der kurzen Diagonalen der Aussparung (25) beträgt z.B. 44%, die Länge der langen Diagonalen beispielsweise 80% der Tiefe des Lichtverteilers (21). Der Abstand dieser Aussparung (25) von der Lichteintrittsfläche (23) beträgt beispielsweise ein Fünftel der Tiefe des Lichtverteilers (21). Der Querschnitt der Aussparung (25) kann sich z.B. in Richtung der horizontalen Mittenlängsebene verjüngen.

Die näher an der Lichteintrittsfläche (23) liegenden Begrenzungsflächen (26, 27) der Aussparung (25) sind beispielsweise Abschnitte von Mantelflächen eines Zylinders, eines Ellipsoids, eines Paraboloids, eines Kegels, etc. Sind die Begrenzungsflächen (26, 27) Abschnitte von Zylinder- oder Kegelmantelflächen, kann die Grundfläche des Zylinders oder des Kegels kreisförmig, ellipsenförmig, oval etc. sein. Die Grundfläche kann auch durch eine beliebig gekrümmte, stetige oder unstetige Raumkurve begrenzt sein, z.B. durch eine Parabel. Es ist auch denkbar, diese Begrenzungsflächen (26, 27) als Planflächen auszuführen.

Auch die Begrenzungsflächen (28, 29) der Aussparung (25), die von der Lichteintrittsfläche (23) weiter entfernt sind, können Planflächen, Abschnitte von Mantelflächen eines Zylinders, eines Ellipsoids, eines Paraboloids, eines Kegels, etc. sein.

Auf der Vorderseite (12) hat der Lichtverteiler (21) eine in der Längsrichtung des Lichtleitkörpers (10) orientierte, zumindest annähernd v-förmige Kerbe (51), deren Mittelebene mit der horizontalen Mittenlängsebene der Leuchteinheit (2) zusammenfällt. Die Kerbflächen (52, 53) sind beispielsweise Oberflächenabschnitte eines Zylindermantels, wobei der Zylinder eine Grundfläche hat, die kreisförmig, elliptisch, oval, etc. ist oder die durch eine geschlossene, stetig oder unstetig gekrümmte Raumkurve begrenzt ist. Gegebenenfalls können die Kerbflächen (52, 53) auch ebene Flächen sein oder aus einzelnen stetigen oder unstetig gekrümmten Flächenelementen zusammengesetzt sein. Der von den beiden Kerbflächen (52, 53) eingeschlossene Kerbwinkel ist beispielsweise kleiner als 100 Grad.

Die beiden Lichtauskoppeleinheiten (61, 81) sind symmetrisch zur horizontalen Mittenlängsebene der Leuchteinheit (2) angeordnet. Ihre Länge entspricht im Ausführungsbeispiel der Länge des Lichtleitkörpers (10), ihre Tiefe beträgt etwa zwei Drittel der Tiefe des Lichtleitkörpers (10).

Auf der Rückseite (11) hat jede Lichtauskoppeleinheit (61, 81) auf ihrer gesamten Länge eine dreieckige Längskerbe (63, 83), deren Tiefe annähernd 20% der Tiefe des Lichtleitkörpers (10) beträgt. Die Scheitellinien (64, 84) der Längskerben (63, 83) liegen hier um ein Drittel der Höhe des Lichtleitkörpers (10) versetzt zur horizontalen Mittenlängsebene. Der Kerbwinkel der Längskerben (63, 83) beträgt beispielsweise 46 Grad. Die von der horizontalen Mittenlängsebene entfernten Begrenzungsflächen (65, 85) der Längskerben (63, 83) sind z.B. ebene Flächen, die parallel zur horizontalen Mittenlängsebene liegen.

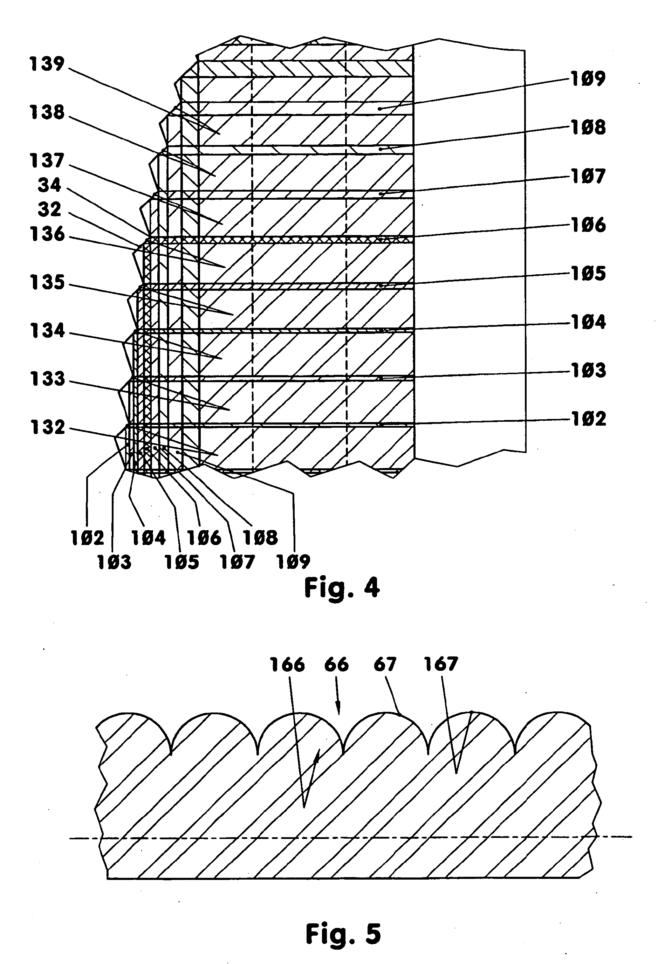

Die näher an der horizontalen Mittenlängsebene liegenden Begrenzungsflächen (66, 86) der Längskerben (63, 83) sind aus einzelnen Flächenelementen (67, 87) zusammengesetzt. Diese Flächenelemente (67, 87) sind beispielsweise Mantelflächenabschnitte nach außen gewölbter Zylinder, vgl. die Figuren 1 und 5. Sie liegen parallel zueinander, wobei die gedachten Zylinderachsen quer zur Längsrichtung des Lichtleitkörpers (10) orientiert sind und ihre Länge der Breite der jeweiligen Begrenzungsfläche (66, 86) entspricht. Die Flächenelemente (67, 87) können auch Mantelflächenabschnitte von Ellipsoiden, Paraboloiden etc. sein. Diese können konvex oder konkav gewölbt sein. Die gedachten Achsen dieser Flächenelemente können auch schräg zur Längsrichtung des Lichtleitkörpers (10) liegen.

Die Lichtaustrittsflächen (71, 91) sind Abschnitte von Zylindermantelflächen. Die zugehörigen Zylinder, die parallel zur horizontalen Mittenlängsebene liegen, haben beispielsweise die Länge des Lichtleitkörpers (10) und einen ovalen Querschnitt. Sie sind jeweils um ein Viertel der Höhe des Lichtleitkörpers (10) zur horizontalen Mittenlängsebene versetzt. Die Höhe der Lichtaustrittsflächen (71, 91) entspricht beispielsweise annähernd einem Drittel der Höhe des Lichtleitkörpers (10).

Auf den Lichtaustrittsflächen (71, 91) können optische Linsen angeordnet sein.

Zur Befestigung z.B. im Kraftfahrzeug, hat der Lichtleitkörper (10) einen oberen (62) und einen unteren Befestigungsflansch (82). Diese Befestigungsflansche (62, 82) sind beispielsweise Teile der oberen (61) bzw. der unteren Lichtauskoppeleinheit (81).

Bei der Herstellung der Leuchteinheit (2) wird der Lichtleitkörper (10) beispielsweise im Spritzgießverfahren erzeugt. Hierbei kann beispielsweise zumindest der elektrische Teil einer Leuchtdiode (6) eingeformt werden. Der Lichtleitkörper (10) wird durch dieses Herstellungsverfahren weitgehend homogenen. Einzelne Bereiche der Oberfläche des Lichtleitkörpers (10) können verspiegelt werden.

Zum Einbau in ein Kraftfahrzeug wird die Leuchteinheit (2) beispielsweise mit dem oberen (62) und dem unteren Befestigungsflansch (82) in der Fahrzeugkarosserie befestigt und die Lichtquelle (6) elektrisch angeschlossen. Gegebenenfalls liegt zwischen den Lichtaustrittsflächen (71, 91) eine hier nicht dargestellte Blende. Die Einbaumaße der Leuchteinheit (2) im Kraftfahrzeug werden im Wesentlichen durch die Abmessungen des Lichtleitkörpers (10) bestimmt. So entspricht die Einbaulänge der Leuchteinheit (2) der Länge des Lichtleitkörpers (10) und die Einbauhöhe der Höhe des Lichtleitkörpers (10). Die Einbautiefe, vgl. Figur 2, wird durch die Tiefe des Lichtleitkörpers (10) und die Lichtquelle (6) bestimmt.

Bei einer ausgeschalteten Leuchteinheit (2) sind von außerhalb des Kraftfahrzeuges die Lichtaustrittsflächen (71, 91) sichtbar. Diese erscheinen als gleichmäßige, farblich homogene Flächen.

Beim Betrieb der Leuchteinheit (2) tritt das von der Lichtquelle (6) emittierte Licht (101 - 109) in Einstrahlrichtung (9) durch die Lichteintrittsfläche (23) hindurch in den Lichtverteiler (21) des Lichtleitkörpers (10). Im Lichtverteiler (21) trifft das Licht (101 - 109) auf die Grenzflächen der Aussparung (25), die durch die Begrenzungsflächen (26, 27) gebildet werden. Für das auftreffende Licht (101 - 109) sind diese Grenzflächen Lichtumlenkungs- und Brechungsflächen (126, 127).

Licht (101), das auf diese Flächen (126, 127) unter einem Winkel zur Normalen auftrifft, der kleiner ist als der Grenzwinkel der Totalreflexion - bei einem Lichtleitkörper aus PMMA ist dieser Winkel beispielsweise 43 Grad - tritt unter Brechung durch die Lichtumlenk- und Brechungsfläche (126, 129) hindurch in die Aussparung (25). Durch die Begrenzungsflächen (28, 29) tritt ein Teil dieses Lichts (101) - unter erneuter Brechung - wieder in den Lichtleitkörper (10) ein.

Das Licht (102 - 109), das unter einem Winkel auf die Lichtumlenk- und Brechungsflächen (126, 127) auftrifft, der größer ist als der werkstoffspezifische Grenzwinkel, wird an diesen Flächen (126, 127) reflektiert.

Die beiden symmetrisch zueinander angeordneten Lichtumlenkungs- und Brechungsflächen (126, 127) bilden einen Lichtteiler (125). Beim Auftreffen auf den Lichtteiler (125) wird das Licht (102 - 109) sowohl in die in der Figur 2 oben dargestellte Hälfte des Lichtverteilers (21), als auch in die in derselben Figur unten dargestellte Hälfte des Lichtverteilers (21) abgelenkt. In den Figuren 2 und 4 ist das reflektierte, divergierende Licht (102 - 109) vereinfacht als paralleles Lichtbündel (102 - 109) dargestellt.

Die beiden Lichtreflektoren (126, 127) des Lichtteilers (125) sind für jeweils eine Hälfte des Lichtverteilers (21) indirekte Lichtquellen. Im Lichtverteiler (21) wird das reflektierte Licht (102 - 109) in Richtung der Stufenflächen (32, 42) geleitet, vgl. Figur 4.

Die Figur 4 zeigt ein Detail des in der oberen Hälfte der Figur 2 dargestellten Lichtumlenkbereiches. An den jeweiligen Grenzflächen (32, 42) wird jeweils nur ein an die Scheitelstrecke (34; 44) angrenzender Abschnitt ausgeleuchtet. Dieser jeweilige Abschnitt ist eine Lichtumlenkfläche (132 - 139). Diese Lichtumlenkflächen (132 - 139) sind gestaffelt angeordnet, wobei von den dargestellten Lichtumlenkflächen (132 - 139) die Lichtumlenkfläche (132) den geringsten Abstand zum Lichtreflektor (126) hat und die Lichtumlenkfläche (139) am weitesten vom Lichtreflektor (126) entfernt ist. Bei eingeschalteter Lichtquelle (6) leuchtet der Teil (102) des Lichtes (102 - 109) die Lichtumlenkfläche (132) aus, der Lichtteil (103) beleuchtet die Lichtumlenkfläche (133) beleuchtet, etc. Die einzelnen Bereiche des Lichts (102 - 109) liegen beim Verlassen des Lichtreflektors (126) unmittelbar nebeneinander. Die durch die Rückseitenflächen (33, 43) gebildeten Grenzflächen sind Freiflächen.

Je weiter die einzelne Lichtumlenkfläche (132 - 139) vom Lichtreflektor (126) entfernt ist, desto weiter ragt sie in den Lichtverteiler (21) - in der Figur 4 nach rechts - hinein. Hierbei ist der Betrag, um den eine vom Lichtreflektor (126) entfernter liegende Lichtumlenkfläche (133 - 139) weiter in den Lichtverteiler (21) hineinragt als die nächstnähere Lichtumlenkfläche (132 - 138), nicht konstant. Dieser Betrag steigt an mit dem Abstand der Lichtumlenkflächen (132 - 139) zum Lichtreflektor (126). Somit ist - zumindest bei annähernd parallelen Lichtumlenkflächen (132 - 139) - der Flächeninhalt einer weiter entfernt liegenden Lichtumlenkfläche (132 - 139) größer als der Flächeninhalt der nächst näherliegenden Lichtumlenkfläche (132 - 139).

Das beispielsweise die Lichtumlenkfläche (135) ausleuchtende Licht (105) wird an dieser Lichtumlenkfläche (135) in der Darstellung der Figur 4 nach rechts reflektiert. Es ergibt sich ein Lichtband (105), das breiter ist als das benachbarte Lichtband (104). Damit ist die Lichtstärke, die an der Lichtumlenkfläche (135) reflektiert wird, größer als die Lichtstärke, die an der Lichtumlenkfläche (134) umgelenkt wird. Gleichzeitig ist dieses Lichtband (105) schmäler als das Lichtband (106) das an der Lichtumlenkfläche (136) reflektiert wird. Hiermit wird an der Lichtumlenkfläche (135) auch eine geringere Lichtstärke umgelenkt als an der Lichtumlenkfläche (136). Die Teillichtströme des umgelenkten Lichtbündels sind damit zumindest annähernd gleich.

Das Licht (107), das beim Verlassen des Lichtreflektors (126) in der Darstellung der Figuren 2 und 4 rechts neben dem Lichtteil (106) liegt, tangiert die Lichtumlenkfläche (136) in ihrer Scheitellinie (34) und leuchtet die nächst weiter entfernte Lichtumlenkfläche (137) aus. Der Lichtteil (106) seinerseits, der die Lichtumlenkfläche (136) ausleuchtet, tangiert die Lichtumlenkfläche (135). Somit trifft das gesamte reflektierte Licht (102 - 109) auf die Lichtumlenkflächen (132 - 139).

Das auf die Lichtumlenkflächen (132 - 139) auftreffende Licht (102 - 109) hat u.a. aufgrund der Absorption des Werkstoffs eine unterschiedliche Lichtstärke. So werden die weiter entfernten Lichtumlenkflächen (132 - 139) mit einer geringeren Lichtstärke bzw. Beleuchtungsstärke ausgeleuchtet als die näherliegenden Lichtumlenkflächen (132 - 139).

Die gedachten Mittellinien der einzelnen Lichtumlenkflächen (132 - 139) haben zumindest annähernd den gleichen Abstand zueinander und sind in diesem Ausführungsbeispiel zueinander parallel. Die Staffelung der Lichtumlenkflächen (132 - 139), der Abstand der einzelnen Scheitelstrecken (34, 35; 34, 36) zueinander, nimmt ab mit zunehmenden Abstand der Lichtumlenkfläche (132 - 139) vom Lichtreflektor (126).

Die Lichtumlenkflächen (132 - 139) können auch aus mehreren Einzelflächen zusammengesetzt sein.

Das an den Lichtumlenkflächen (132 - 139) reflektierte Lichtbündel (102 - 109) ist weitgehend homogen, da die geringere Lichtstärke in den von dem Lichtreflektor (126, 127) entfernteren Abschnitten durch eine größere Lichtumlenkfläche (132 - 139) ausgeglichen wird.

Das homogen verteilte Licht (101 - 109) trifft auf die Grenzflächen des Lichtleitkörpers (10), die durch die Kerbflächen (52, 53) gebildet werden. Die beiden Grenzflächen schließen den Komplementärwinkel der V-förmigen Kerbe (51) zu 360 Grad ein, also z.B. mindestens einen Winkel von 260 Grad. Sie bilden einen Umlenk-Lichtteiler (151), dessen gedachte Symmetrieebene normal zur gedachten Symmetrieebene des Lichtteilers (125) ausgerichtet ist. Der Lichtteiler (151) hat zwei Reflexionsflächen (152, 153), an denen das auftreffende Licht (101 - 109) in der Darstellung der Figuren 1 und 3 nach oben bzw. nach unten umgelenkt wird. Mittels der Wölbung der Reflexionsflächen (152, 153) kann das an ihnen reflektierte Licht (101 - 109) gebündelt werden. Gegebenenfalls können diese Flächen (152, 153) Streuoptiken aufweisen, die beispielsweise das Licht (101 - 109) in Längsrichtung des Lichtleitkörpers (10) streuen.

Das am Umlenk-Lichtteiler (151) reflektierte Licht (101 - 109) trifft auf die Grenzflächen des Lichtleitkörpers (10), die durch die Begrenzungsflächen (66, 86) der Längskerben (63, 83) gebildet werden. Die Flächenelemente (67, 87) bilden segmentierte Totalreflexionsoptiken (166), die das auftreffende Licht (101 - 109) in Richtung der Lichtaustrittsflächen (71, 91) umlenken. Hierbei wird das Licht (101 - 109) beispielsweise mittels der in Figur 5 dargestellten halbzylindrischen Reflexionselemente (167) in Längsrichtung des Lichtleitkörpers (10) aufgefächert. Die Reflexionselemente (167) können beispielsweise auch Abschnitte von Zylindersegmenten sein, deren Segmentwinkel kleiner ist als 180 Grad. Die Grundfläche der Zylinder kann auch durch einen Parabelabschnitt, einen Ellipsenabschnitt, etc. begrenzt sein. Die optische Achse der hier dargestellten Reflexionselemente (167) kann auch mit der Längsachse des Lichtleitkörpers (10) einen Winkel einschließen, der ungleich 90 Grad ist.

Das derart reflektierte und aufgeweitete Lichtbündel (102 - 109) tritt durch die Lichtaustrittsflächen (71, 91) in die Umgebung (1). Die gedachten Achsen der Lichtaustrittsflächen (71; 91) sind beispielsweise parallel zur gedachten Symmetrieebene des Umlenk-Lichtteilers (151).

Beim Betrieb der Leuchteinheit (2) erscheinen die Lichtaustrittsflächen (71, 91) als homogen ausgeleuchtete Flächen. Die Lichtaustrittsflächen (71, 91) können daher bei der Herstellung der Leuchteinheit (2) frei gestaltet werden und z.B. an die Karosserie des Kraftfahrzeugs angepasst werden und beispielsweise dessen Außenkontur folgen. Die Lichtaustrittsflächen (71, 91) Flächen erscheinen z.B. optisch glatt.

Die Leuchteinheit (2) kann unsymmetrisch aufgebaut sein. Die Lichtumlenkflächen (132 - 139) können beispielsweise direkt von der Lichtquelle (6) ausgeleuchtet werden. Auch kann die Leuchteinheit (2) mehrere Lichtquellen (6) und/oder mehrere Lichtleitkörper (10) aufweisen.

Die Reflexionsflächen (152, 153) des Umlenk-Lichtverteilers (151) und/oder die Lichtumlenkflächen (130 - 140) können Streuoptiken (166) aufweisen.

Im Kraftfahrzeug ist für die Leuchteinheit (2) nur ein geringer Einbauraum erforderlich. Durch die Anordnung der Lichtquelle (6) auf der Rückseite (11) kann die Leuchteinheit (2) seitlich bündig eingebaut werden. So können beispielsweise mehrere Leuchteinheiten (2) nebeneinander angeordnet werden und so z.B. zwei parallele ununterbrochene lange, homogen leuchtende Lichtbänder erzeugt werden. Auch die Anordnung mehrere Leuchteinheiten (2) übereinander ist denkbar.

In der Darstellung der Figuren 1 bis 3 liegt die Einstrahlrichtung (9) normal zu einer gedachten Tangentialebene der beiden Lichtaustrittsflächen (71, 91). Die Lichtquelle (6) kann auch so angeordnet sein, dass die Einstrahlrichtung (9) mit der Tangentialebene einen spitzen Raumwinkel einschließt.

Die Leuchteinheit (2) kann ein- oder mehrteilig ausgeführt sein.

### Bezugszeichenliste:

- 1: Umgebung, Luft
- 2: Leuchteinheit

- 6: Lichtquelle

- 9: Einstrahlrichtung

- 10: Lichtleitkörper
- 11: Rückseite
- 12: Vorderseite
- 13, 14: Stirnseiten

- 21: Lichtverteiler
- 22: Außenfläche
- 23: Lichteintrittsfläche

- 25: Aussparung
- 26 - 29: Begrenzungsflächen von (25),

- 31, 41: gestufte Bereiche
- 32, 42: Stufenteile, Stufenflächen, Grenzflächen
- 33, 43: Stufenteile, Rückseitenflächen, Grenzflächen
- 34, 44: Scheitelstrecken
- 35, 45: Scheitelstrecken
- 36, 46: Scheitelstrecken

- 51: v-förmige Kerbe
- 52, 53: Kerbflächen

- 61: Lichtauskoppeleinheit, oben
- 62: Befestigungsflansch, oben
- 63: Längskerbe
- 64: Scheitellinie
- 65: Begrenzungsfläche von (63)
- 66: Begrenzungsfläche von (63)
- 67: Flächenelemente von (66)

- 71: Lichtaustrittsfläche

- 81: Lichtauskoppeleinheit, unten
- 82: Befestigungsflansch, unten
- 83: Längskerbe
- 84: Scheitellinie
- 85: Begrenzungsfläche von (83)
- 86: Begrenzungsfläche von (83)
- 87: Flächenelemente von (86)

- 91: Lichtaustrittsfläche

- 101: Licht durch (126)
- 102: Licht, reflektiert an (126) und (132)
- 103: Licht, reflektiert an (126) und (133)
- 104: Licht, reflektiert an (126) und (134)
- 105: Licht, reflektiert an (126) und (135)
- 106: Licht, reflektiert an (126) und (136)
- 107: Licht, reflektiert an (126) und (137)
- 108: Licht, reflektiert an (126) und (138)
- 109: Licht, reflektiert an (126) und (139)

- 125: Lichtteiler
- 126: Lichtumlenkungs- und Brechungsfläche, Lichtreflektor
- 127: Lichtumlenkungs- und Brechungsfläche, Lichtreflektor

- 132 - 139: Lichtumlenkflächen

- 151: Umlenk-Lichtteiler
- 152: Reflexionsfläche
- 153: Reflexionsfläche

- 166: segmentierte Totalreflexionsoptiken
- 167: Reflexionselemente, Mantelflächenabschnitte

## Patentansprüche

1. Leuchteinheit mit mindestens einer Lichtquelle (6) und mindestens einem der Lichtquelle (6) optisch nachgeschalteten Lichtleitkörper (10) mit direkt oder indirekt von der Lichtquelle (6) ausgeleuchteten, gestaffelt angeordneten Lichtumlenkflächen (132 - 139), wobei der Flächeninhalt einer Lichtumlenkfläche (132 - 139) umso größer ist, je größer der Abstand dieser Lichtumlenkfläche (132 - 139) von der die Lichtumlenkflächen (132 - 139) ausleuchtenden Lichtquelle (6) oder von einem die Lichtumlenkflächen (132 - 139) ausleuchtenden Lichtreflektor (126; 127) ist, **dadurch gekennzeichnet, dass** den Lichtumlenkflächen (132 - 139) ein Umlenk-Lichtteiler (151) optisch nachgeschaltet ist.

2. Leuchteinheit nach Anspruch 1, **dadurch gekennzeichnet, dass** das eine Lichtumlenkfläche (132 - 138) tangierende Licht (103 - 109) auf die nächst weiter entfernte Lichtumlenkfläche (133 - 139) auftrifft.

3. Leuchteinheit nach Anspruch 1, **dadurch gekennzeichnet, dass** die Staffelung der Lichtumlenkflächen (132 - 139) abnimmt mit zunehmenden Abstand der Lichtumlenkflächen (132 - 139) von der Lichtquelle (6) oder dem Lichtreflektor (126; 127).

4. Leuchteinheit nach Anspruch 1, **dadurch gekennzeichnet, dass** der einzelne Lichtreflektor (126; 127) Teil eines Lichtteilers (125) ist.

5. Leuchteinheit nach Anspruch 4, **dadurch gekennzeichnet, dass** die Lichtumlenkflächen (132 - 139) symmetrisch zur Lichtquelle (6) angeordnet sind.

6. Leuchteinheit nach Anspruch 1 und 5, **dadurch gekennzeichnet, dass** die gedachte Symmetrieebene des Umlenk-Lichttellers (151) normal zur gedachten Symmetrieebene des Lichtteilers (125) ausgerichtet ist.

7. Leuchteinheit nach Anspruch 1, **dadurch gekennzeichnet, dass** der Umlenk-Lichtteiler (151) Reflexionsflächen (152, 153) aufweist, die miteinander einen Winkel von mindestens 260 Grad einschließen.

8. Leuchteinheit nach Anspruch 1, **dadurch gekennzeichnet, dass** der Lichtleitkörper (10) mindestens eine Begrenzungsfläche (66, 86), mindestens eine Lichtumlenkfläche (132 - 139) oder mindestens Reflexionsfläche (152, 153) mit segmentierten Totalreflexionsoptiken (166) aufweist.

9. Leuchteinheit nach Anspruch 8, **dadurch gekennzeichnet, dass** die segmentierte Totalreflexionsoptiken (166) aneinander angrenzende, parallel zueinander angeordnete Mantelflächenabschnitte (167) von Zylindern sind.

10. Leuchteinheit nach Anspruch 1, **dadurch gekennzeichnet, dass** der Lichtleitkörper (10) mindestens eine Lichtaustrittsfläche (71; 91) hat, die ein Oberflächenabschnitt eines Zylinders ist.

11. Leuchteinheit nach den Ansprüchen 6 und 10, **dadurch gekennzeichnet, dass** die gedachte Achse der Lichtaustrittsfläche (71; 91) parallel zur gedachten Symmetrieebene des Umlenk-Lichtteilers (151) angeordnet ist.

12. Leuchteinheit nach Anspruch 11, **dadurch gekennzeichnet, dass** der Lichtleitkörper (10) achsensymmetrisch ist in Bezug auf zwei gedachte, normal zueinander liegende Symmetrieebenen, deren gemeinsame Gerade die Lichtquelle (6) durchdringt und in der Einstrahlrichtung (9) ausgerichtet ist.

13. Leuchteinheit nach Anspruch 1, **dadurch gekennzeichnet, dass** die Tiefe des Lichtleitkörpers (10) maximal 30% der Länge des Lichtleitkörpers (10) beträgt.

14. Leuchteinheit nach Anspruch 1, **dadurch gekennzeichnet, dass** die Lichtquelle (6) eine Leuchtdiode ist.

## Claims

1. Lighting unit having at least one light source (6) and at least one light guide body (10) optically downstream from the light source (6) with light deflection surfaces (132 - 139) arranged staggered and directly or indirectly illuminated by the light source (6), where the surface content of a light deflection surface (132 - 139) is all the greater, the greater the distance of this light deflection surface (132 - 139) is from the light source (6) illuminating the light deflection surfaces (132 - 139) or from a light reflector (126; 127) illuminating the light deflection surfaces (132 - 139), **characterized in that** a deflecting light divider (151) is optically downstream from the light deflection surfaces (132 - 139).

2. Lighting unit according to Claim 1, **characterized in that** the light (103-109) touching a light deflection surface (132 - 138) impinges on the nearest further light deflection surface (133 - 139).

3. Lighting unit according to Claim 1, **characterized in that** the staggering of the light deflection surfaces (132 - 139) decreases as the distance of the light deflection surfaces (132 - 139) from the light source (6) or from the light reflector (126; 127) increases.

4. Lighting unit according to Claim 1, **characterized in that** the individual light reflector (126; 127) is part of a light divider (125).

5. Lighting unit according to Claim 4, **characterized in that** the light deflection surfaces (132 - 139) are arranged symmetrical to the light source (6).

6. Lighting unit according to Claims 1 and 5, **characterized in that** the imaginary symmetry plane of the deflecting light divider (151) is oriented normal to the imaginary symmetry plane of the light divider (125).

7. Lighting unit according to Claim 1, **characterized in that** the deflecting light divider (151) has reflection surfaces (152, 153) describing an angle of at least 260 degrees to one another.

8. Lighting unit according to Claim 1, **characterized in that** the light guide body (10) has at least one limiting surface (66, 86), at least one light deflection surface (132 - 139) or at least one reflection surface (152, 153) with segmented total reflection optics (166).

9. Lighting unit according to Claim 8, **characterized in that** the segmented total reflection optics (166) are outer surface sections (167) of cylinders adjacent to one another and arranged parallel to one another.

10. Lighting unit according to Claim 1, **characterized in that** the light guide body (10) has at least one light exit surface (71; 91) which is the surface section of a cylinder.

11. Lighting unit according to Claims 6 and 10, **characterized in that** the imaginary axis of the light exit surface (71; 91) is arranged parallel to the imaginary symmetry plane of the deflecting light divider (151).

12. Lighting unit according to Claim 11, **characterized in that** the light guide body (10) is axis-symmetrical relative to two imaginary symmetry planes positioned normal relative to one another and whose common straight line penetrates the light source (6) and is oriented in the incoming light direction (9).

13. Lighting unit according to Claim 1, **characterized in that** the depth of the light guide body (10) is a maximum of 30% of the length of the light guide body (10).

14. Lighting unit according to Claim 1, **characterized in that** the light source (6) is a light-emitting diode.

## Revendications

1. Unité d'éclairage avec au moins une source lumineuse (6) et au moins un guide de lumière (10) optiquement dispose en aval de la source lumineuse (6) avec des surfaces déviant la lumière (132 - 139) disposées de manière échelonnée et illuminées directement ou indirectement par la source lumineuse (6), sachant que plus la distance d'une surface déviant la lumière (132 - 139) par rapport à la source lumineuse (6) illuminant les surfaces déviant la lumière (132 - 139) ou par rapport à un réflecteur de lumière (126 ; 127) illuminant les surfaces déviant la lumière (132 - 139) est importante, plus l'aire de cette surface déviant la lumière (132 - 139) est grande, **caractérisée en ce qu'**un diviseur de lumière par déviation (151) est optiquement disposé en aval des surfaces déviant la lumière (132 - 139).

2. Unité d'éclairage selon la revendication 1, **caractérisée en ce que** la lumière (103 - 109) tangente à une surface déviant la lumière (132 - 138) est incidente sur la prochaine surface déviant la lumière (133 - 139).

3. Unité d'éclairage selon la revendication 1, **caractérisée en ce que** l'échelonnement des surfaces déviant la lumière (132 - 139) diminue au fur et à mesure qu'augmente la distance des surfaces déviant la lumière (132 - 139) par rapport à la source lumineuse (6) ou au réflecteur de lumière (126 ; 127).

4. Unité d'éclairage selon la revendication 1, **caractérisée en ce que** le seul réflecteur de lumière (126 ; 127) fait partie d'un diviseur de lumière (125).

5. Unité d'éclairage selon la revendication 4, **caractérisée en ce que** les surfaces déviant la lumière (132 - 139) sont disposées symétriquement par rapport à la source lumineuse (6).

6. Unité d'éclairage selon les revendication 1 et 5, **caractérisée en ce que** le plan de symétrie imaginaire du diviseur de lumière par déviation (151) est orienté normalement par rapport au plan de symétrie imaginaire du diviseur de lumière (125).

7. Unité d'éclairage selon la revendication 1, **caractérisée en ce que** le diviseur de lumière par déviation (151) présente des surfaces de réflexion (152, 153) qui incluent ensemble un angle d'au moins 260 degrés.

8. Unité d'éclairage selon la revendication 1, **caractérisée en ce que** le guide de lumière (10) présente au moins une surface de limitation (66, 86), au moins une surface de déviation de la lumière (132 - 139) ou au moins une surface de réflexion (152, 153) avec des optiques réfléchissantes totales segmentées (166).

9. Unité d'éclairage selon la revendication 8, **caractérisée en ce que** les optiques réfléchissantes totales segmentées (166) sont des sections de surface extérieure (167) de cylindres adjacentes et disposées parallèlement les unes par rapport aux autres.

10. Unité d'éclairage selon la revendication 1, **caractérisée en ce que** le guide de lumière (10) présente au moins une surface de sortie de la lumière (71 ; 91) qui est une section de surface d'un cylindre.

11. Unité d'éclairage selon les revendications 6 et 10, **caractérisée en ce que** l'axe imaginaire de la surface de sortie de la lumière (71 ; 91) est disposé parallèlement au plan de symétrie imaginaire du diviseur de lumière par déviation (151).

12. Unité d'éclairage selon la revendication 11, **caractérisée en ce que** le guide de lumière (10) est symétrique par rapport à l'axe en relation avec deux plans de symétrie imaginaires positionnés normalement l'un par rapport à l'autre, dont la droite commune traverse la source lumineuse (6) et est orientée dans le sens de rayonnement (9).

13. Unité d'éclairage selon la revendication 1, **caractérisée en ce que** la profondeur du guide de lumière (10) s'élève au maximum à 30 % de la longueur du guide de lumière (10).

14. Unité d'éclairage selon la revendication 1, **caractérisée en ce que** la source lumineuse (6) est une diode électroluminescente.
